# EUROPÄISCHE PATENTSCHRIFT

(11) **EP 0 457 936 B1**
(45) Veröffentlichungstag und Bekanntmachung des Hinweises auf die Patenterteilung: **09.11.1994**
(21) Anmeldenummer: 90109602.4
(22) Anmeldetag: 21.05.1990
(51) Int. Cl.: H02G 3/14

(54) **Unterputzgerätedose als Kombinationseinheit**
Box for flush mounted apparatus used as a combination unit
Boîtier d'appareillage à monter en affleurement utilisé en tant qu'unité de combinaison

(43) Veröffentlichungstag der Anmeldung: 27.11.1991
(73) Patentinhaber: SIEMENS AKTIENGESELLSCHAFT, 80333 München (DE)
(72) Erfinder: Kammerl, Franz, Dipl.-Ing. (FH), D-8411 Endlfeld (DE)

(56) Entgegenhaltungen:
- DE-A- 1 465 268
- DE-A- 2 647 777

## Beschreibung

Die Erfindung bezieht sich auf eine Unterputzgerätedose als Kombinationseinheit für mehrere Arten von Elementen,wie Bedienelementen bzw. Anschlußelementen, der Installationstechnik, bei der in Gehäusen jeweils ein Sockelteil an einem Tragrahmen gehalten ist, wobei die Tragrahmen durch einen gemeinsamen Abdeckrahmen abdeckbar sind.

In der Installationstechnik sind Unterputzgerätedosen in den verschiedenartigsten Kombinationsausführungen bekannt. Insbesondere sind gemeinsame Abdeckrahmen für mehrere Elemente, sei es Bedienelemente oder Anschlußelemente, der Installationstechnik als sogenannte Kombinationsrahmen bekannt. In der Gebäudesystemtechnik sind ebenfalls Bedienelemente und Anschlußstellen erforderlich, die man mit Elementen der klassischen Installationstechnik kombinieren möchte. Zum Montieren und Ausbauen von Elementen der Gebäudesystemtechnik die über einen Installationsbus miteinander in Verbindung stehen, müßte man in bisher gebräuchlicher Art und Weise den Abdeckrahmen entfernen, wodurch der gleichzeitige Zugriff zu Anschlüssen der Elemente der klassischen Installationstechnik möglich wäre. Das ist nach Sicherheitsvorschriften jedoch unzulässig.

Der Erfindung liegt die Aufgabe zugrunde, eine Unterputzgerätedose als Kombinationseinheit zu entwickeln, die es ermöglicht, Elemente der Gebäudesystemtechnik mit solchen der klassischen Installationstechnik in der Kombinationseinheit anzuordnen.

Die Lösung der geschilderten Aufgabe besteht darin, daß der Abdeckrahmen in Montagefeldern für Elemente der Gebäudesystemtechnik in seiner lichten Weite weiter ausgeführt ist als es den Abmessungen des Außenprofils ihrer Tragrahmen entspricht.

Dadurch erzielt man ohne Materialaufwand, etwa für zusätzliche Abdeckungen, durch geringfügige Abwandlung eines konventionellen Kombinationsrahmens in den einschlägigen Sicherheitsvorschriften entsprechender Weise den Einbau von Elementen der Gebäudesystemtechnik in Nachbarschaft mit solchen der klassischen Installationstechnik.

Es ist vorteilhaft, wenn der Abdeckrahmen Auflageflächen für Handbedienungsorgane bildet, um die der Tragrahmen verkürzt ausgebildet ist. Handbedienungsorgane können sich hierbei in gewohnter Weise auf dem Abdeckrahmen abstützen, ohne das erfindungsgemäße Prinzip zu stören. Danach ist für den Ein- und Ausbau von Sockeln bzw. Elementen der Installationstechnik es erforderlich, den Abdeckrahmen abzunehmen, hingegen können Sockel bzw. Elemente der Gebäudesystemtechnik bei montiertem Abdeckrahmnen ein- und ausgebaut werden.

Eine einfache Ausführungsform der eben geschilderten Ausgestaltung besteht darin, daß sich die Auflageflächen am Abdeckrahmen bis zu abgeschrägten Ecken des Tragrahmens erstrecken.

Die Erfindung soll nun anhand eines in der Zeichnung grob schematisch wiedergegebenen Ausführungsbeispiels eines Kombinationsrahmens für zwei Elemente näher erläutert werden.
- In FIG 1: ist die Aufsicht auf eine Kombinationseinheit für zwei Arten von Elementen wiedergegeben,
- In FIG 2: ist ein Schnitt längs II - II nach FIG 1 dargestellt.

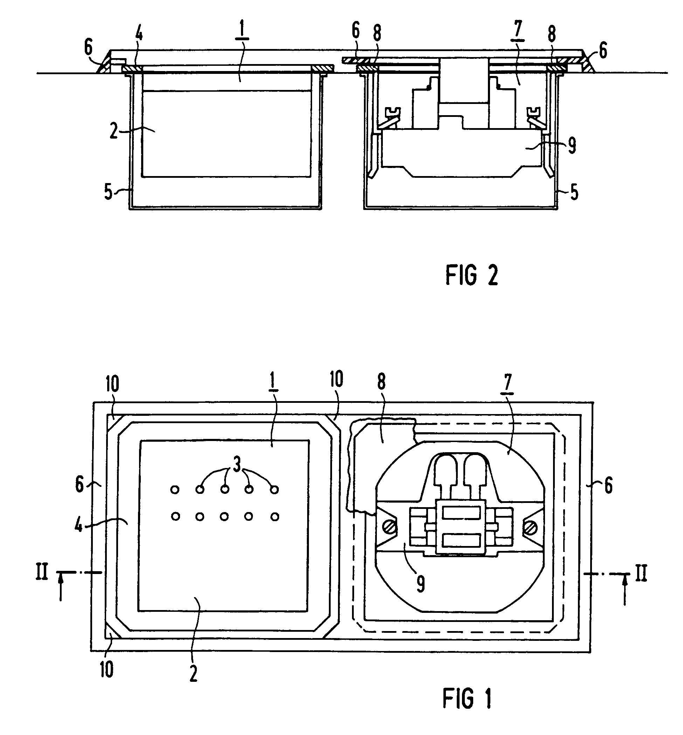

Die Unterputzgerätedose nach Fig. 1 ist als Kombinationseinheit für zwei Arten von Elementen ausgeführt. Das linke Element ist im Ausführungsbeispiel als Bedienelement oder als Anschlußstelle der Gebäudesystemtechnik ausgeführt und das rechte Element wird im Sinne der klassischen Istalationstechnik verwandt.

Im Ausführungsbeispiel ist bei abgenommenem Handbedienungsorgan der Blick auf den Sockel eines Installationsschalters freigegeben. Bei abgenommenem Handbedienungsorgan ist im linken Montagefeld 1 für Gebäudesystemtechnik ein Sockel 2 mit Steckaufnahmen 3 zu Steckerstiftungen des Handbedienungsorgans wiedergegeben. Der Sockel 2 des Elements der Gebäudesystemtechnik ist mit einem Tragbügel 4 verbunden, mit dem er auf dem Rand einer Unterputzgerätedose aufliegend befestigt ist. Ein Abdeckrahmen 6 schließt zusammen mit noch einzusetzenden Handbedienungsorganen in die Kombinationseinheit nach Außen ab. Der Abdeckrahmen 6 weist im Ausführungsbeispiel links ein Montagefeld 1 für ein Element der Gebäudesystemtechnik und rechts ein Montagefeld 7 für ein Element der Installationstechnik auf. Allgemein weist der Abdeckrahmen 6 in Montagefeldern 1 für Elemente der Gebäudesystemtechnik eine größere lichte Weite auf als es den Abmessungen des Außenprofils des Tragrahmens 4 entspricht. Der Tragrahmnen 4 kann mit dem daran befestigten Sockel eines Elementes durch den Abdeckrahmen 6 hindurch eingesetzt und auch entfernt werden. Beim Montagefeld 7 für ein Element der Installationstechnik übergreift der Abdeckrahmen 6 den Tragrahmen 8 eines Elementes der Installationstechnik. In der Zeichnung ist der Abdeckrahmen 6 beim Tragrahmen 8 des Elementes der Installationstechnik teilweise aufgebrochen wiedergegeben. Am Tragrahmen 8 ist im Ausführungsbeispiel der Sockel 9 für ein Element der Installationstechnik im engeren Sinn angebracht.

Der Abdeckrahmen 6 nach Fig. 1 bildet Auflageflächen für Handbedienungsorgane. Im Montagefeld 1 der Gebäudesystemtechnik sind im Ausführungsbeispiel dreieckige Auflageflächen 10 ausgebildet. Im Montagefeld 7 für ein Element der Installationstechnik im engeren Sinn dient als Auflagefläche der gesamte Boden des Abdeckrahmens 6 innerhalb des äußeren Randes.

Die Auflageflächen 10 des Montagefeldes der Gebäudesystemtechnik erstrecken sich am Abdeckrahmen bis zu abgeschrägten Ecken des Tragrahmens 4.

Wie auch aus der Schnittansicht nach Fig.2 zu ersehen ist, übergreift der Abdeckrahmen 6 beim Montagefeld 7 den Tragrahmen 8 für ein Element der Installationstechnik. Der Tragrahmen 4 für ein Element der Gebäudesystemtechnik liegt im Abdeckrahmnen 6 jedoch frei. Der Tragrahmen 4 kann also, ohne den Abdeckrahmen 6 abzunehmen, montiert oder entfernt werden. Die Tragrahmen 8 der Elemente der Installationstechnik werden häufig auch Hängebügel genannt.

## Patentansprüche

1. Unterputzgerätedose als Kombinationseinheit für mehrere Arten von Elementen, wie Bedienelemente bzw. Anschlußstellen, der Installationstechnik, bei der in Gehäusen (5) jeweils ein Sockelteil(9) an einem Tragrahmen ( 8) gehalten ist, wobei die Tragrahmen durch einen gemeinsamen Abdeckrahmen (6) abdeckbar sind, **dadurch** **gekennzeichnet**, daß der Abdeckrahmen (6) in Montagefeldern (1) für Elemente (z.B.Sockel 2) der Gebäudesystemtechnik in seiner lichten Weite weiter ausgeführt ist als es den Abmessungen des Außenprofils ihrer Tragrahmen (4) entspricht.

2. Unterputzgerätedose nach Anspruch 1, dardurch gekennzeichnet, daß der Abdeckrahmen (6) Auflageflächen (10) für Handbedienungsorgane bildet, wozu der Tragrahmen (4) entsprechend verkürzt ausgebildet ist.

3. Unterputzgerätedose nach Anspruch 2, dadurch gekennzeichnet, daß sich die Auflageflächen (10) am Abdeckrahmen (6) bis zu abgeschrägten Ecken des Tragrahmens (4) erstrecken.

## Claims

1. A flush-mounted appliance outlet as a combination unit for numerous types of components, such as operating controls or junctions, used in conventional wiring practice, in which a receptacle part (9) is secured in each of the housings (5) to a mounting bracket (8), the mounting brackets (8) being coverable by a common cover plate (6), characterised in that the inside width of the cover plate in mounting fields (1) for components used in building wiring systems, is wider than that which corresponds to the dimensions of the outer profile of the mounting bracket (4) for such components.

2. A flush-mounted appliance outlet according to claim 1, characterised in that the cover plate (6) forms bearing surfaces (10) for manual control elements, to which end the mounting bracket (4) is correspondingly shortened.

3. A flush-mounted appliance outlet according to claim 2, characterised in that the bearing surfaces (10) on the cover plate (6) extend as far as the angled corners of the mounting plate (4).

## Revendications

1. Prise d'appareil encastrée réalisée sous la forme d'une unité combinatoire pour plusieurs types d'éléments, tels que des éléments de commande, des prises de raccordement, de la technique d'installation, dans laquelle respectivement une partie formant socle (9) est fixée à un cadre de support (8) dans des boîtiers (5), les cadres de support pouvant être recouverts par un cadre commun de fermeture (6), caractérisée par le fait que, dans des panneaux de montage (1) pour des éléments (par exemple des socles 2) de la technique des systèmes du bâtiment, le cadre de revêtement (6) est agencé avec une ouverture dont la dimension est supérieure à ce qui correspond aux dimensions du profil extérieur de leurs cadres de support (4).

2. Prise d'appareil encastrée suivant la revendication 1, caractérisée par le fait que le cadre de fermeture (6) forme des surfaces d'appui (10) pour des organes d'actionnement manuel, le cadre de support (4) étant agencé à cet effet en étant raccourci de façon correspondante.

3. Prise d'appareil encastrée suivant la revendication 2, caractérisée par le fait que les surfaces d'appui (10) présentes sur le cadre de fermeture (6) s'étendent jusqu'aux coins biseautés du cadre de support (4).
